# EUROPÄISCHE PATENTSCHRIFT

(11) **EP 0 892 201 B1**
(45) Veröffentlichungstag und Bekanntmachung des Hinweises auf die Patenterteilung: **23.04.2003**
(21) Anmeldenummer: 98108592.1
(22) Anmeldetag: 12.05.1998
(51) Int. Cl.: F16K 31/06

(54) **Ventileinrichtung**
Valve device
Dispositif de soupape

(30) Priorität: 15.07.1997 DE 19730276
(43) Veröffentlichungstag der Anmeldung: 20.01.1999
(73) Patentinhaber: WABCO GmbH & Co. OHG, 30453 Hannover (DE)
(72) Erfinder: Frank, Dieter, 30171 Hannover (DE); Höfler, Siegfried, 30165 Hannover (DE); Kutzner, Henning, 31008 Elze (DE)
(74) Vertreter: Schrödter, Manfred, Dipl.-Ing.

(56) Entgegenhaltungen:
- DE-A- 3 502 730
- GB-A- 2 124 342
- US-A- 2 860 850
- PATENT ABSTRACTS OF JAPAN vol. 016, no. 137 (M-1231), 7. April 1992 (1992-04-07) & JP 04 000079 A (MITSUBISHI ELECTRIC CORP), 6. Januar 1992 (1992-01-06)

## Beschreibung

Die Erfindung betrifft eine Ventileinrichtung mit wenigstens zwei relativ zueinander beweglichen Teilen gemäß dem Oberbegriff des Patentanspruchs 1, wie sie aus der US-A-2 860 850 bekannt ist.

Eine weitere Einrichtung ist aus der DE 35 02 730 A1 bekannt.

Diese weitere Ventileinrichtung weist einen ein Verschlußstück betätigenden Magnetanker, der in einer durch eine Magnetspule umfaßten Führungshülse verschieblich angeordnet ist, auf. Der Magnetanker ist zur Verbesserung der Gleitfähigkeit auf dem mit der Führungshülse in Kontakt befindlichen Teil der Oberfläche mit einer Beschichtung aus einem Kunststoff versehen.

Neben der Verbesserung der Gleitfähigkeit des beweglichen Teils in dem dazu unbeweglichen Teil besteht bei derartigen Ventileinrichtungen die Notwendigkeit, den Aufprall des beweglichen Teils auf das unbewegliche Teil zu dämpfen. Hierdurch sollen Beschädigungen an diesen üblicherweise aus relativ hartem Material gefertigten Teilen vermieden werden.

Allgemeiner gesagt ist es notwendig, eine Einrichtung mit wenigstens zwei relativ zueinander beweglichen Teilen, die infolge ihrer relativen Bewegung zueinander aufeinanderprallen können, derart auszubilden, daß eine Beschädigung dieser Teile vermieden wird. Hierfür sind z. B. federnd wirkende Dämpfungsmittel, z. B. Gummi, die zwischen den beweglichen Teilen angeordnet sind, bekannt.

Die bekannten Dämpfungsmittel haben einen relativ großen Platzbedarf, wenn sie eine wirksame Dämpfung bewirken sollen und nach Möglichkeit auch eine lange Lebensdauer aufweisen sollen. In einer Vielzahl von Einrichtungen, insbesondere in neueren Ventileinrichtungen, steht nur ein geringes Platzangebot zur Verfügung.

Ein größeres Platzangebot zur Unterbringung der bekannten Dämpfungsmittel würde mit einer Vergrößerung des für eine einwandfreie Funktion der Ventileinrichtung erforderlichen Hubes des Magnetankers einhergehen. Zur Betätigung einer derartigen Ventileinrichtung wäre dann eine höhere Magnetkraft erforderlich. Dies könnte beispielsweise mit einer relativ großen Magnetspule und einem relativ hohen Betätigungsstrom erreicht werden. Eine Vergrößerung der Magnetspule oder eine Erhöhung des Stromverbrauchs sind jedoch unerwünscht.

Der Erfindung liegt die Aufgabe zugrunde, eine eine Ventileinrichtung, mit wenigstens zwei relativ zueinander beweglichen Teilen, anzugeben, die gegenüber dem gattungbildenden Stand der Technik einen kompakten Aufbau aufweist.

Diese Aufgabe wird durch die im Patentanspruch 1 angegebene Erfindung gelöst. Weiterbildungen und vorteilhafte Ausgestaltungen der Erfindung sind in den Unteransprüchen angegeben.

Bei Verwendung von Polytetrafluoräthylen als Beschichtungsmaterial wird der zusätzliche Vorteil erreicht, daß bei einer Vielzahl von Werkstoffen für die Führungseinrichtung ein nahezu identischer Haft- und Gleitreibbeiwert, der zudem sehr gering ist, erzielbar ist. Hierdurch können insbesondere von Ventileinrichtungen her bekannte Slipstick-Effekte vermieden werden. Ein weiterer Vorteil bei der Verwendung von Polytetrafluoräthylen ist, daß fertigungsbedingte Toleranzen der Reibwerte im Vergleich zu anderen Beschichtungsmaterialien sehr gering sind. Daher ist auch bei Großserienfertigung ein nahezu gleiches Reibungsverhalten ohne zusätzlichen Aufwand erzielbar.

In einer bevorzugten Ausgestaltung ist der Ventilsitz einstückig mit dem Kern der Elektromagnetanordnung ausgebildet sein. Hierdurch wird ein besonders kompakter und auch kostengünstiger Aufbau der Ventileinrichtung erreicht.

Zur Verbesserung des Wirkungsgrades der Ventileinrichtung kann die Elektromagnetanordnung zusätzlich noch ein Joch aufweisen, durch das der magnetische Fluß vom Kern zum Anker geführt wird. Hierdurch kann der Stromverbrauch der Ventileinrichtung verringert werden.

Die Erfindung wird anhand von Ausführungsbeispielen unter Zuhilfenahme von Zeichnungen näher erläutert.

Es zeigen
- Fig. 1: eine Ventileinrichtung in einer Ausführungsform als 2/2-Wegeventil in Schnittdarstellung und
- Fig. 2: eine Ventileinrichtung in einer Ausführungsform als 3/2-Wegeventil in Schnittdarstellung und
- Fig. 3: einen Ausschnitt der Ventileinrichtung gemäß Fig. 2 in betätigtem Zustand.

In den Figuren werden gleiche Bezugszeichen für einander entsprechende Teile verwendet.

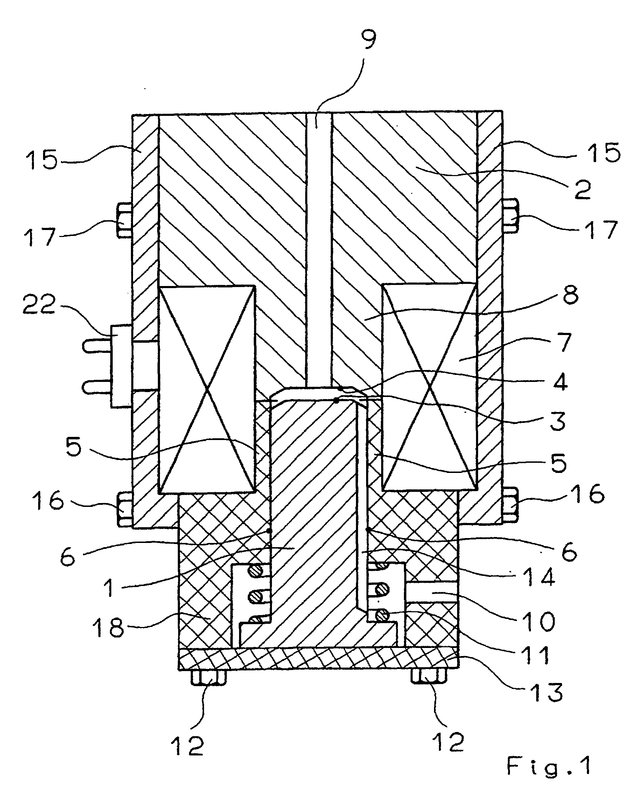

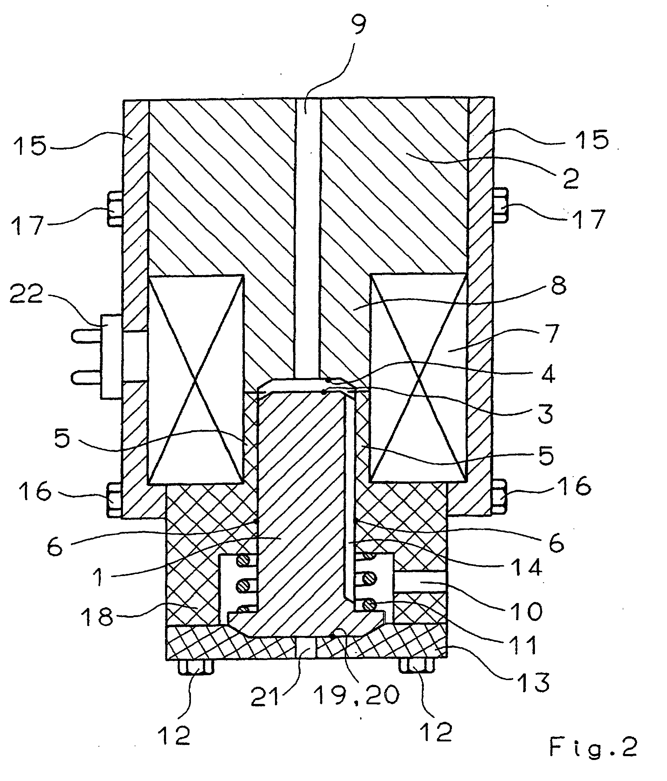

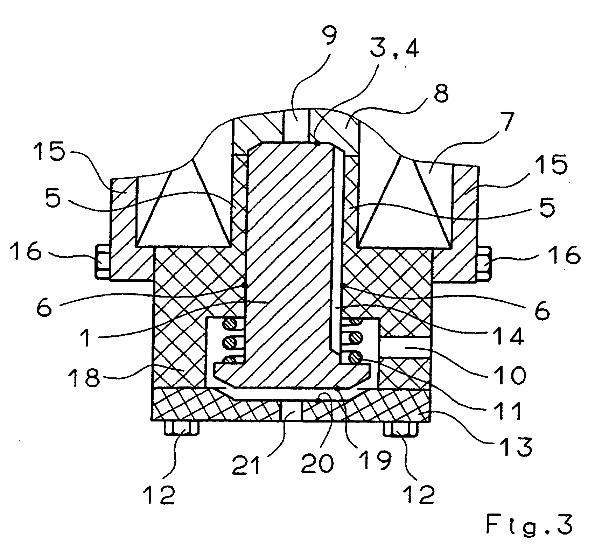

Die in den Figuren dargestellten Ausführungsformen der Ventileinrichtung dienen zur Steuerung eines Druckmittelstroms in Abhängigkeit von einem elektrischen Signal, wobei die Ausführungsform gemäß Fig. 1 zum Einund Ausschalten des Druckmittelstroms in einem einzigen Strömungspfad und die Ausführungsform gemäß Fig. 2 bzw. 3 zum Umschalten des Druckmittelstroms zwischen zwei Strömungspfaden dient. Als Druckmittel kann dabei z. B. Druckluft eingesetzt werden. Als elektrisches Signal kann ein elektrischer Strom, der nach einer festlegbaren Zeitfunktion nach Art eines Digitalsignals ein- und ausgeschaltet wird, verwendet werden.

Es wird im folgenden zunächst der Aufbau und die Funktionsweise der Ausführungsform gemäß Fig. 1 beschrieben.

Die Ventileinrichtung weist ein aus den Teilen (2, 13, 15, 18) bestehendes Ventilgehäuse auf, die mittels der Schrauben (12, 16, 17) miteinander verbunden sind. Die Gehäuseteile (2, 18 bzw. 18, 13) sind jeweils druckdicht miteinander verbunden. Zur Erzielung einer guten Dichtigkeit können an den Anlageflächen dieser Teile Dichtungen angeordnet sein, die jedoch in der Fig. 1 nicht dargestellt sind.

In dem Gehäuseteil (18) ist ein Einlaßkanal (10) für das Druckmittel angeordnet. In dem Gehäuseteil (2) ist ein Auslaßkanal (9) für das Druckmittel angeordnet. An diese Druckmittelkanäle (9, 10) können z. B. Druckmittelschläuche angeschlossen werden.

In dem Ventilgehäuse (2, 13, 15, 18) ist ein bezüglich des Ventilgehäuses bewegliches Teil (1) angeordnet, das einerseits als Ventilschließkörper zur Absperrung eines Druckmittelflusses zwischen den Druckmittelkanälen (9, 10) und andererseits als Anker in einer im folgenden noch näher beschriebenen Elektromagnetanordnung dient. Der Ventilschließkörper (1) weist einen Druckmittelkanal (14) auf, über den im geöffneten Zustand des Ventils, wie in der Fig. 1 gezeigt, das Druckmittel von dem Einlaßkanal (10) zu dem Auslaßkanal (9) strömen kann.

Die zuvor erwähnte Elektromagnetanordnung weist neben dem Anker (1) noch einen durch einen verjüngten Abschnitt (8) des Gehäuseteils (2) gebildeten Kern, eine Spule (7) sowie ein von dem Gehäuseteil (15) gebildetes Joch auf.

Die Spule (7) ist unbeweglich bezüglich des Ventilgehäuses (2, 13, 15, 18) angeordnet und umgibt den Kern (8) sowie einen verjüngten Abschnitt des Gehäuseteils (18). Die Spule (7) dient als Bewegungs-Auslöseeinrichtung für die Ventileinrichtung und bewirkt bei Einspeisung eines ausreichend starken elektrischen Stromes eine Bewegung des Ankers (1) in Richtung des Kerns (8). Die Spule (7) besteht aus elektrisch leitfähigem Draht. Zur Einspeisung des elektrischen Stroms in die Spule (7) ist an einer Öffnung des Gehäuseteils (15) ein elektrisches Anschlußelement angeordnet., das mit der Spule (7) elektrisch verbunden ist.

Der Anker (1) wird durch eine Feder (11) in der in der Fig. 1 dargestellten Stellung gehalten, solange in der Spule (7) kein für die Überwindung der Federkraft ausreichender Strom fließt. In diesem Zustand ist das Ventil geöffnet, was bedeutet, daß das Druckmittel von dem Einlaßkanal (10) zu dem Auslaßkanal (9) strömen kann.

Das Gehäuseteil (15) dient als Joch der Elektromagnetanordnung und bewirkt einen magnetischen Rückschluß des durch die Spule in dem Kern (8) und dem Anker (1) erzeugten Magnetfeldes. Hierdurch wird der Strombedarf für die Betätigung der Ventileinrichtung gesenkt und somit der Wirkungsgrad verbessert.

Die miteinander magnetisch in Wirkverbindung stehenden Teile (1, 2, 8, 15) sind aus magnetisch leitfähigem Material, z. B. aus einem weichmagnetischen Werkstoff, insbesondere aus Stahl, gefertigt. Die Gehäuseteile (13, 18) sind aus magnetisch nicht leitfähigem Material, z. B. Kunststoff oder Messing, gefertigt.

Der Kern (8) weist an seiner dem Anker (1) zugewandten Seite einen Ventilsitz (4) auf. Dem Ventilsitz (4) ist eine Ventilschließfläche (3) zugeordnet, die an dem Anker (1) angeordnet ist. Beim Einspeisen eines ausreichend starken elektrischen Stromes in die Spule bewegt sich der Anker (1) in Richtung des Kerns (8), bis die Ventilschließfläche (3) auf den Ventilsitz (4) aufprallt. Nach dem Abklingen von eventuell auftretenden Einschwingvorgängen liegt dann die Ventilschließfläche (3) an dem Ventilsitz (4) an und sperrt hierdurch einen Druckmittelfluß zwischen den Druckmittelkanälen (9, 10) ab. Das Ventil ist dann geschlossen.

Bei der zuvor beschriebenen Ventilbetätigung durch Einspeisen eines elektrischen Stromes dienen die Ventilschließfläche (3) und der Ventilsitz (4) als Aufprallflächen. Zur Vermeidung von Beschädigungen beim Aufprall dieser Aufprallflächen aufeinander ist an der Ventilschließfläche (3) eine Beschichtung vorgesehen. Als Werkstoff für die Beschichtung wird ein Kunststoff verwendet, der mit einer im Vergleich zu den übrigen Abmessungen des Ankers (1) relativ geringen Schichtdicke aufgebracht wird.

Als Kunststoff wird vorzugsweise Polytetrafluoräthylen verwendet, das mit einer Schichtdicke zwischen 5 und 30 µm aufgebracht wird. Hierdurch wird sehr wenig Beschichtungsmaterial verbraucht.

Die Beschichtung kann auch an dem Ventilsitz (4) angebracht sein. Es ist jedoch vorteilhaft, die Beschichtung an der Ventilschließfläche (3) und somit an dem Anker (1) anzubringen, weil dieser als relativ kompaktes Einzelteil beim Beschichtungsvorgang einfach zu handhaben ist. Es ist schließlich auch möglich, sowohl am Anker (1) als auch an dem Ventilsitz (4) eine Beschichtung anzubringen.

Die der Ventilschließfläche (3) abgewandte Seite des Ankers (1) bzw. die dieser Seite zugewandte Oberfläche des Gehäuseteils (13) kann ebenfalls mit einer Beschichtung der zuvor erwähnten Art versehen werden, um Beschädigungen auch beim Öffnen des Ventils zu vermeiden. Insbesondere bei Ventileinrichtungen mit umgekehrter Wirkungsart, d.h. bei in unbetätigtem Zustand der Bewegungs-Auslöseeinrichtung, d.h. stromloser Spule (7), geschlossenen Ventileinrichtungen, ist eine derartige Ausgestaltung vorteilhaft.

Ein Bereich (5) des Gehäuseteils (18) dient als Führungseinrichtung für den darin beweglichen Anker (1). Zur Erhöhung der Gleitfähigkeit des Ankers (1) in der Führungseinrichtung (5) sind die Berührungsflächen (6) dieser Teile ebenfalls mit einer Beschichtung der oben erwähnten Art versehen. Die Beschichtung kann entweder an der Innenseite der Führungseinrichtung (5) oder vorzugsweise an der Außenseite des Ankers (1) angebracht sein. In besonders kostengünstiger Weise kann z. B. der gesamte Anker (1) in einem Arbeitsgang mit der Beschichtung versehen werden, beispielsweise durch Tauchen des Ankers (1) in dem Beschichtungsmaterial.

Die Ausführungsform der Ventileinrichtung gemäß Fig. 2 weist zusätzlich zu den bereits beschriebenen Teilen noch einen zweiten Auslaßkanal (21) auf, der in dem Gehäuseteil (13) angeordnet ist. Des weiteren ist ein ebenfalls an dem Gehäuseteil (13) angeordneter zweiter Ventilsitz (20) vorgesehen, dem eine auf der der Ventilschließfläche (3) abgewandten Seite des Ankers (1) angeordnete, zweite Ventilschließfläche (19) zugeordnet ist. Die zweite Ventilschließfläche (19) dient in Verbindung mit dem zweiten Ventilsitz (20) zum Absperren eines Druckmittelstroms von dem Einlaßkanal (10) zu dem zweiten Auslaßkanal (21). Es ist somit im unbetätigten Zustand der Ventileinrichtung, wie in der Fig. 2 dargestellt, der Einlaßkanal (10) über den Druckmittelkanal (14) mit dem Auslaßkanal (9) verbunden. Bei Betätigung der Ventileinrichtung durch Einspeisung eines elektrischen Stroms in die Spule (7) wird dann infolge der Bewegung des Ankers (1) der Auslaßkanal (9) abgesperrt und der Einlaßkanal (10) mit dem zweiten Auslaßkanal (21) verbunden. Dieser Betriebszustand der Ventileinrichtung ist in der Fig. 3 dargestellt.

Bei der in den Fig. 2 bzw. 3 dargestellten Ausführungsform ist eine Beschichtung der oben erwähnten Art vorzugsweise auch an der zweiten Ventilschließfläche (19) zangebracht.

## Patentansprüche

1. Ventileinrichtung mit wenigstens zwei relativ zueinander beweglichen Teilen (1, 2), die infolge ihrer relativen Bewegung zueinander aufeinanderprallen, mit folgenden Merkmalen:
a) für den Aufprall ist an jedem der Teile (1, 2) eine Aufprallfläche (3, 4) vorgesehen,
b) wenigstens eine der Aufprallflächen (3, 4) ist wenigstens zum Teil mit einer Beschichtung versehen, die dünn im Vergleich zu den übrigen Abmessungen der relativ zueinander beweglichen Teile (1, 2) ist,
c) die Beschichtung besteht aus Kunststoff,
d) eines (2) der relativ zueinander beweglichen Teile (1, 2) weist einen Ventilsitz (4) auf,
e) das andere Teil (1) ist als Ventilschließkörper ausgebildet und weist an seiner dem Ventilsitz (4) zugewandten Seite eine Ventilschließfläche (3) auf, die dem Ventilsitz (4) zugeordnet ist und zum Schließen des Ventils dient,
f) wenigstens ein Teil der Beschichtung bedeckt wenigstens teilweise diejenigen Bereiche des Ventilsitzes (4) und/oder der Ventilschließfläche (3), an denen der Ventilsitz (4) und die Ventilschließfläche (3) aufeinanderprallen können,
g) für die relative Bewegung der Teile (1, 2) zueinander ist eine betätigbare Bewegungs-Auslöseeinrichtung (7) vorgesehen,
h) die Bewegungs-Auslöseeinrichtung (7) ist unbeweglich bezüglich des einen Teils (2) angeordnet und bewirkt eine Bewegung des anderen Teils (1),
i) die Bewegungs-Auslöseeinrichtung (7) ist als Spule ausgebildet, die einen Teil einer Elektromagnetanordnung bildet,
k) das unbeweglich bezüglich der Spule (7) angeordnete Teil (2) weist einen wenigstens teilweise innerhalb der Spule (7) angeordneten Kern (8) auf, der einen weiteren Teil der Elektromagnetanordnung bildet,
**gekennzeichnet durch** folgende Merkmale:
l) das bewegliche Teil (1) ist als wenigstens teilweise innerhalb der Spule (7) angeordneter Anker ausgebildet, der einen weiteren Teil der Elektromagnetanordnung bildet,
m) die Teile (1, 7, 8) der Elektromagnetanordnung stehen stehen miteinander magnetisch in Wirkverbindung.

2. Einrichtung nach Patentanspruch 1, **dadurch gekennzeichnet, daß** als Kunststoff ein fluorhaltiger Polymerwerkstoff verwendet wird.

3. Einrichtung nach Patentanspruch 2, **dadurch gekennzeichnet, daß** als fluorhaltiger Polymerwerkstoff Polytetrafluoräthylen verwendet wird.

4. Einrichtung nach wenigstens einem der vorhergehenden Patentansprüche, **gekennzeichnet durch** folgende Merkmale:
a) die Bewegung wenigstens eines der relativ zueinander beweglichen Teile (1, 2) wird von einer Führungseinrichtung (5) geführt, die die Bewegungsrichtung dieses Teils (1) festlegt,
b) die Berührungsflächen (6) des geführten Teils (1) bzw. der geführten Teile mit der Führungseinrichtung (5) sind wenigstens teilweise ebenfalls mit der Beschichtung versehen.

5. Einrichtung nach wenigstens einem der vorhergehenden Patentansprüche, **dadurch gekennzeichnet, daß** die Beschichtung eine Schichtdicke von weniger als 30 µm aufweist.

6. Einrichtung nach wenigstens einem der vorhergehenden Patentansprüche, **dadurch gekennzeichnet, daß** die Beschichtung eine Schichtdicke von mehr als 5 µm aufweist.

7. Einrichtung nach wenigstens einem der vorhergehenden Patentansprüche, **dadurch gekennzeichnet, daß** wenigstens eines der relativ zueinander beweglichen Teile (1, 2) aus einem weichmagnetischen Werkstoff, insbesondere aus Stahl, gefertigt ist.

8. Einrichtung nach wenigstens einem der vorhergehenden Patentansprüche, **dadurch gekennzeichnet, daß** der Ventilsitz (4) einstückig mit dem Kem (8) ausgebildet ist.

9. Einrichtung nach wenigstens einem der vorhergehenden Patentansprüche, **gekennzeichnet durch** folgende Merkmale:
a) als weiteres Teil der Elektromagnetanordnung ist ein außerhalb der Spule (7) angeordnetes Joch (15) vorgesehen, das zur Verringerung des magnetischen Widerstandes der Elektromagnetanordnung dient,
b) die Teile (1, 7, 8, 15) der Elektromagnetanordnung stehen stehen miteinander magnetisch in Wirkverbindung.

## Claims

1. Valve device having at least two parts (1, 2) movable relative to one another which impact against one another as a consequence of their relative movement, having the following features:
a) for impact, an impact face (3, 4) is provided on each of the parts (1 ,2),
b) at least one of the impact faces (3, 4) is provide at least partly with a coating that is thin in comparison with the remaining dimensions of the parts (1, 2) movable relative to one another,
c) the coating consists of plastics material,
d) one part (2) of the parts (1, 2) movable relative to one another has a valve seat (4),
e) the other part (1) is in the form of a valve closure body and has a valve closure face (3) on its side facing the valve seat (4), this face being associated with the valve seat (4) and serving to close the valve,
f) at least a part of the coating covers at least partly those regions of the valve seat (4) and/or of the valve closure face (3) at which the valve seat (4) and the valve closure face (3) are able to impact against one another,
g) an actuatable movement-initiating device (7) is provided for the relative movement of the parts (1, 2) with respect to one another,
h) the movement-initiating device (7) is arranged immovably relative to the one part (2) and causes a movement of the other part (1),
i) the movement-initiating device (7) is in the form of a coil (7) which forms part of an electromagnet arrangement,
k) the part (2) arranged immovably relative to the coil (7) comprises a core (8) arranged at least partly within the coil (7), which core forms a further part of the electromagnet arrangement,
**characterised by** the following features:
l) the movable part (2) is in the form of an armature arranged at least partly within the coil (7), which armature forms a further part of the electromagnet arrangement,
m) the parts (1, 7, 8) of the electromagnet arrangement are in magnetic operative connection with one another.

2. Device according to patent claim 1, **characterised in that** a fluorine-containing polymeric material is used as plastics material.

3. Device according to patent claim 2, **characterised in that** polytetrafluoroethylene is used as fluorine-containing polymeric material.

4. Device according to at least one of the preceding patent claims, **characterised by** the following features:
a) the movement of at least one of the parts (1, 2) movable relative to one another is guided by a guide device, which determines the direction of movement of that part (1),
b) the contact faces (6) of the part (1) or of the parts guided with the guiding device (5) are at least partly likewise provided with the coating.

5. Device according to at least one of the preceding patent claims, **characterised in that** the coating has a layer thickness of less than 30 µm.

6. Device according to at least one of the preceding patent claims, **characterised in that** the coating has a layer thickness of more than 5 µm.

7. Device according to at least one of the preceding patent claims, **characterised in that** at least one of the parts (1, 2) movable relative to one another is manufactured from a soft magnetic material, especially from steel.

8. Device according to at least one of the preceding patent claims, **characterised in that** the valve seat (4) is constructed in one piece with the core (8).

9. Device according to at least one of the preceding patent claims, **characterised by** the following features:
a) as further part of the electromagnet arrangement a yoke (15) arranged outside the coil (7) is provided, which serves to reduces the reluctance of the electromagnet arrangement,
b) the parts (1, 7, 8) of the electromagnet arrangement are in magnetic operative connection with one another.

## Revendications

1. Dispositif de soupape comportant au moins deux pièces (1, 2) mobiles l'une par rapport à l'autre qui percutent l'une contre l'autre en raison de leur mouvement relatif, présentant les éléments suivants :
a) pour l'impact, une surface d'impact (3, 4) est prévue sur chacune des pièces (1, 2),
b) l'une au moins des surfaces d'impact (3, 4) est pourvue au moins partiellement d'un revêtement qui est mince par comparaison avec les autres dimensions des pièces (1, 2) mobiles l'une par rapport à l'autre ;
c) le revêtement est constitué en matière plastique ;
d) l'une (2) des pièces (1, 2) mobiles l'une par rapport à l'autre comprend un siège de soupape (4) ;
e) l'autre pièce (1) est réalisée sous forme de corps d'obturation de soupape et comprend sur son côté détourné du siège de soupape (4) une surface d'obturation (3) qui est associée au siège de soupape (4) et qui sert à fermer la soupape ;
f) une partie au moins du revêtement recouvre au moins partiellement ces zones du siège de soupape (4) et/ou celles de la surface d'obturation (3) sur lesquelles le siège de soupape (4) et la surface d'obturation (3) peuvent percuter l'un contre l'autre ;
g) pour le mouvement relatif des pièces (1, 2) l'une par rapport à l'autre, il est prévu un organe de déclenchement de mouvement (7) susceptible d'être actionné ;
h) l'organe de déclenchement de mouvement (7) est agencé de façon immobile par rapport à l'une des pièces (2) et il provoque un mouvement de l'autre pièce (1);
i) l'organe de déclenchement de mouvement (7) est réalisé sous forme de bobine qui forme une partie d'un agencement d'électroaimant ;
k) la partie (2) agencée immobile par rapport à la bobine (7) comprend un noyau (8) agencé au moins partiellement à l'intérieur de la bobine (7), qui forme une autre partie de l'agencement d'électroaimant ;
**caractérisé par** les éléments suivants :
1) la pièce mobile (1) est réalisée sous forme d'induit agencé au moins partiellement à l'intérieur de la bobine (7), qui forme une autre partie de l'agencement d'électroaimant ;
m) les pièces (1, 7, 8) de l'agencement d'électroaimant sont en liaison d'action magnétique l'une avec l'autre.

2. Dispositif selon la revendication 1, **caractérisé en ce qu'**il est prévu une matière polymère contenant du fluor à titre de matière plastique.

3. Dispositif selon la revendication 2, **caractérisé en ce qu'**il est prévu du polytétrafluoroéthylène à titre de matière polymère contenant du fluor.

4. Dispositif selon l'une des revendications précédentes, **caractérisé par** les éléments suivants :
a) le mouvement de l'une au moins des pièces (1, 2) mobiles l'une par rapport à l'autre est guidé par un organe de guidage (5) qui détermine la direction de mouvement de cette pièce (1) ;
b) les surfaces de contact (6) de la pièce guidée (1) ou des pièces guidées avec l'organe de guidage (5) sont pourvues au moins partiellement également du revêtement.

5. Dispositif selon l'une des revendications précédentes, **caractérisé en ce que** le revêtement présente une épaisseur de couche de moins de 30 µm.

6. Dispositif selon l'une des revendications précédentes, **caractérisé en ce que** le revêtement présente une épaisseur de couche de plus de 5 µm.

7. Dispositif selon l'une des revendications précédentes, **caractérisé en ce que** l'une au moins des pièces (1, 2) mobiles l'une par rapport à l'autre est réalisée en matériau magnétique doux, en particulier en acier.

8. Dispositif selon l'une des revendications précédentes, **caractérisé en ce que** le siège de soupape (4) est réalisé d'un seul tenant avec le noyau (8).

9. Dispositif selon l'une des revendications précédentes, **caractérisé par** les éléments suivants :
a) une culasse (15) est prévue comme autre pièce de l'agencement d'électroaimant à l'extérieur de la bobine (7), qui sert à réduire la résistance magnétique de l'agencement d'électroaimant ;
b) les pièces (1, 7, 8, 15) de l'agencement d'électroaimant sont en liaison d'action magnétique les unes avec les autres.
